# EUROPEAN PATENT SPECIFICATION

(11) **EP 1 449 426 B1**
(45) Date of publication and mention of the grant of the patent: **22.06.2011**
(21) Application number: 04075553.0
(22) Date of filing: 19.02.2004
(51) Int. Cl.: A01F 25/20

(54) **Equipment for cutting, loading and mixing fibrous products and its operating process**
Schneide-, Lade-, und Mischvorrichtung für faserige Produkte und Betriebsverfahren derselben
Dispositif pour couper, charger et mélanger des produits fibreux et procédé de fonctionnement correspondant

(30) Priority: 21.02.2003 IT MI20030306
(43) Date of publication of application: 25.08.2004
(73) Proprietor: OFFICINE SGARIBOLDI S.n.c. di Sgariboldi Giuseppe & C., 26845 CODOGNO, (LO) (IT)
(72) Inventor: Sgariboldi, Giuseppe, 26845 Codogno (Lodi) (IT)
(74) Representative: Coletti, Raimondo

(56) References cited:
- EP-A- 0 638 230
- WO-A-00/52993
- DE-A1- 19 913 201
- DE-U1- 20 105 747

## Description

The present invention relates to equipment for cutting, loading and mixing fibrous products and its operating process.

In particular the invention relates to equipment for loading fibrous products into a mixer also possibly equipped with a prior cutting system and destined for the preparation of livestock forage, and also a process for optimising the operating system as a whole.

The equipment for mixing and prior cutting of the fibrous products destined for animal forage, like the equipment for mixing peat and similar products, have been known in the art for some time.

The products are introduced for mixing in the equipment, possibly also including a prior cutting action inside the equipment itself.

In the equipment known in the art, the products to be introduced are loaded by hand, or more recently, using automatic methods through desilage and feeding processes, that are then followed by the cutting and mixing processes before the products, in the case of animal forage, are sent to the cattle-sheds or for stocking.

Generally the equipment known in the art used for cutting and mixing fibrous products destined for livestock forage preparation, is composed of a container, or tank, equipped internally with organs such as augers and paddle wheels adapted to chop and mix fibrous products such as dry hay, silage, straw and similar products that are then introduced into the tank.

Said cutting and mixing organs can be positioned in the tank vertically or horizontally, and the mixed product can be loaded through a side opening.

One of these devices known in the art, is the patent application for the Italian invention ITMI990718-A1 in the name of the Applicant.

Another equipment for the processing of forage and similar products is known, for example, from document DE 201 05 747 U1, which discloses an equipment for loading and mixing fibrous products according to the preamble of claim 1.

According, to the aforesaid patent application ITMI990718-A1, an auger adapted to be mounted on equipment for cutting and mixing fibrous products destined for the preparation of livestock forage, includes an auger comprising a shaft with mixing and cutting means for fibrous products arranged in spiral form around the shaft.

According to the invention, elements for the raised support of the fibrous product are positioned between the auger coils particularly adapted to supporting the bale during cutting action to prevent clogging.

The equipment according to this invention has proved to be particularly advantageous in mixing products introduced in bale form, since the product is gradually processed while maintained in a raised position thus preventing agglomeration, and consequently eliminating the risk of product clogging.

Other equipment is also known in the art for the processing of forage and similar products that are normally stored in silos or stocked in bale form, wherein the products must be previously desilaged or shredded in order to be introduced into the mixing equipment in fibrous form.

Recently, equipment adapted for the loading of fibrous products into the mixing tank has been realised in automated form using conveyor systems.

The mixer is composed of an auger that performs any necessary product cutting and mixing, followed by a system for emptying the tank of the resulting product, ready for distribution as animal forage.

The equipment already known in the art, used to process the previously chopped products does not take particular care to maintain the integrity of the fibrous structure of the products.

Said products destined for the preparation of single rations called Unifeed, such as silage stored corn, grass, dehydrated forage, puffed cereals and similar products are already critically sized and their structure can be easily damaged by the thrust action of the auger and cutting knives.

In fact, in order to amalgamate and ensure completely homogenous mixing, the cutting and mixing means mounted on the auger must exercise a considerable vertical, horizontal and rotating thrust action that is often strong enough to damage the product making it extremely difficult for cattle to assimilate and ruminate.

Therefore, the main object of the present invention is to overcome said problems that occur with systems known in the art, with equipment for loading and mixing fibrous products, and through a process that is able to optimise said function.

To attain this object, according to the present invention, it was decided to realise loading and mixing equipment for fibrous products as well as a process for optimising said function having the characteristics described in the appended claims.

The structural and functional characteristics of the fibrous product loading and mixing equipment and relative process according to the present invention, as well as the advantages to be gained in comparison with known state of the art, will be made clear and obvious in the following description, provided as an example, but by no means limitative, in reference to the appended drawings wherein:

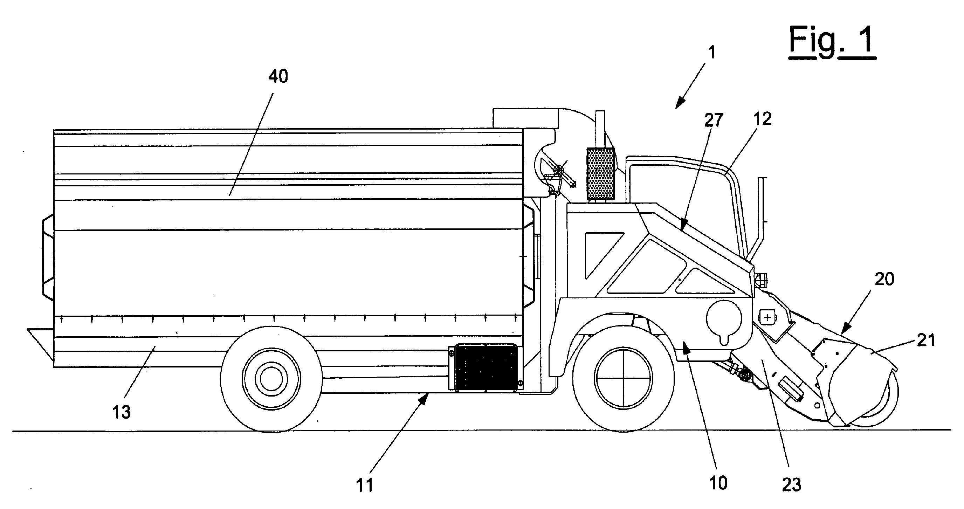

Figure 1 is an elevated right hand side view of cutting, loading and mixing equipment for fibrous products according to the invention;
Figure 2 is an elevated left hand side view of the equipment shown in figure 1;

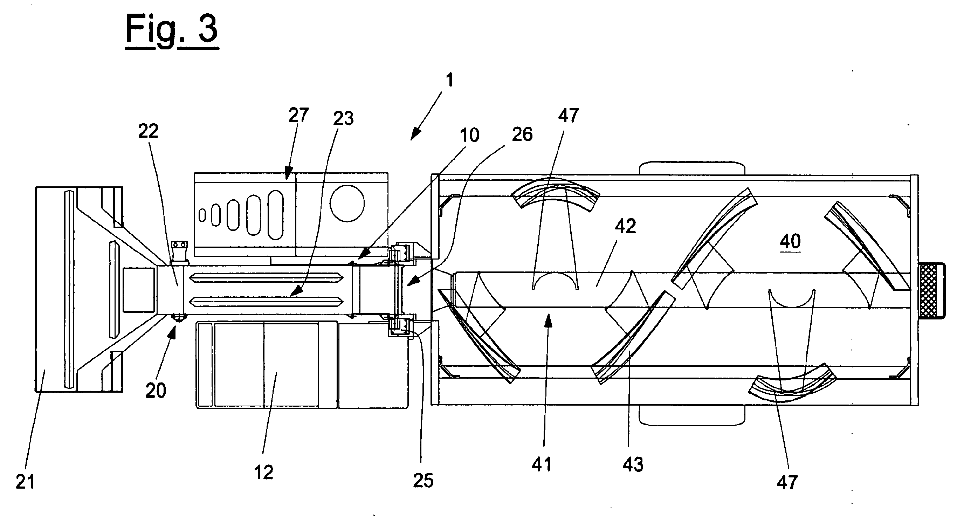

Figure 3 is a plane view of the equipment shown in figure 1;
Figure 4 is a partial view in perspective of the equipment according to the invention.

In reference to the appended figures, the description relates to equipment for mixing fibrous products such as hay, straw, cereals, small sized plants, fruit, vegetables, tuberous plants, also mixed with liquids, destined for livestock forage or for peat and similar products, and is identified throughout by the numeral 1, and in the illustrated examples according to the present invention, comprises a self-propelling means 10 equipped with a cabin 12 for driving and controlling said means.

The self-propelled means 10 is equipped frontally with a desilaging device 20 and is equipped with a container or tank 40, mounted on a chassis 11 of the self-propelling means positioned at the rear of the driving cabin 12.

The self-propelling means 10 is also equipped frontally with a motor unit 27 appropriately protected and housed on the side of the cabin 12.

The desilaging device 20 comprises a channel 23 that encloses a conveyor 24, composed of an elongated casing attached in a manner to permit oscillation by means of the two ends that are attached for this purpose to the structure of the self-propelling means 10.

A hinged system on the desilaging device 20 permits controlled raising of the device for loading the products to be mixed, even when said products are stacked and/or at considerable height.

At the end facing the exterior, the channel 23 is connected to a cutter 21 adapted to collect the products to be mixed and to feed them onto the conveyor 24.

The conveyor 24 is controlled and driven by a drive mechanism group 25 comprising motorisation and transmission means.

To perform the previous cutting action on the product, a mill cutter 22, is positioned between the cutter and the conveyor, which, in the case of long fibre products, chops the products to the required length for the best possible mixing capacity.

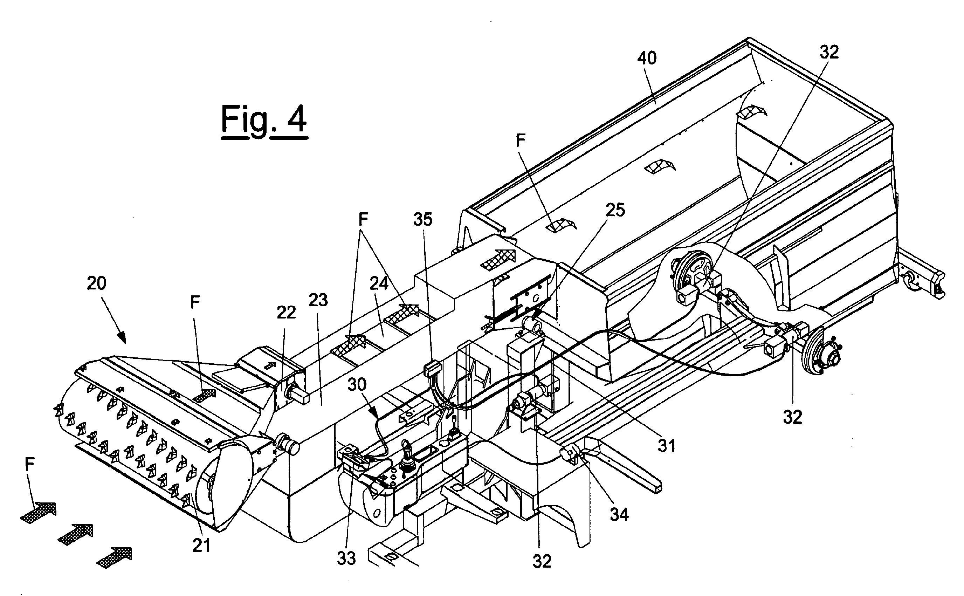

The products loaded in this manner are sent to the conveyor and introduced into the tank 40 in the direction shown by the arrows F in figure 4, passing through the opening 26 in channel 23.

The tank 40 has an elongated cylindrical shape, with an opening on the top for practically the total length and adapted to contain a rotor 41 comprising a rotating shaft 42 on which are mounted the mixing elements 43 realised in anchor or blade shape arranged in a spiral in order to execute a single step, or preferably, two opposite steps that converge towards the central zone.

Said spiral elements can also be continuous or discontinuous, in other words, interrupted according to requirements.

The mixing elements are also mounted with a plurality of scrapers 47 positioned near the peripheral edges, composed of sheets in an elastic material such as fabric-faced rubber, adapted to evacuate all mixed products and residue to prevent the forming of damaging fermentation.

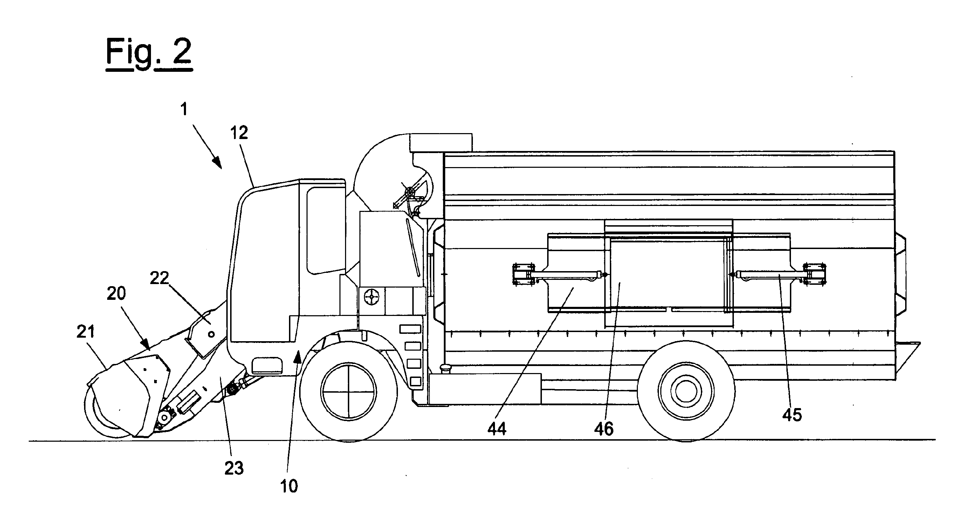

In particular reference to figure 2, the container is also provided with an opening 46 on at least one side and preferably in a central position for unloading the mixed product, with a door 44 that can be closed automatically from means 45, for example by means of appropriate hydraulic cylinders.

Equipment 1 is also provided with an electronic weighing system 30 operatively connected to the drive mechanism 25 of conveyor 24 of the desilaging device 20 particularly to control the travel speed and the introduction of the products to be mixed.

The weighing system 30 comprises appropriate electric connecting cables generally represented with the numeral 31, and is also provided with weight sensors 32, an acoustic signal 34, a connection box 35 that collects the data transmitted by the sensors, and a control unit 33 that also incorporates the electronic weight indicator function that forms the "heart" of the system, as it can be programmed to optimise the product loading into the tank.

The control unit 33 is positioned inside the cabin 12 for easy and ergonomic operation control.

The equipment process is composed of various steps wherein the material is taken up by the cutter 21; transported by the conveyor 24; towards the mixing tank or container 40; introduced through the opening 26; weighed by the weighing system 30; and conveyor speed variations are controlled from the control unit 33.

Where necessary, it is possible to add a previous fibre-cutting step by means of the mill cutter 22, for products that are too long to be fed into the mixer.

The equipment functions according to the following mode:
During the loading step that is performed by the simultaneous action of the cutter and the conveyor, the weighing system, that has been previously programmed according to the quantity and type of products to be loaded, is set so that when a pre-established percentage has been attained, for example 50%, of each single component product of the ration mixture, an automatic signal is transmitted to the conveyor motor system.

This command activates a variation in the conveyor rotation speed, and consequently, also in the speed at which the product is introduced into the container.

This action permits the control of the product distribution in a pre-established position along the length of the tank, thus obtaining a drastic reduction in the time the various products remain inside the mixer in order to reach correct homogeneous product mixing.

Advantageously, thanks to said process, the equipment according to the invention provides perfect final product results, soft and homogenous, preventing all risk of stagnation and clogging, above all in the position where the products are introduced between the tank or container walls and the auger, that can provoke undesirable overloading on the auger shaft, leading to motor shut-down and considerable damage to transmission organs.

Furthermore, excessive reduction of product size is advantageously prevented, thus maintaining the nutritional and digestible characteristics that have been obtainable till now only with the use of rotating drum-mixing systems.

The aforesaid description in reference to the appended figures clearly explains how the equipment and the process according to the present invention are particularly useful and advantageous, able to attain the aim proposed in the preamble of said description.

## Claims

1. Equipment for loading and mixing fibrous products, comprising a self-propelling means (10), a desilaging device (20) positioned to extend with an oscillating movement from the front portion of the self-propelling means (10), and mounted with a conveyor (24) adapted to load the products to be mixed, a container or tank (40) mounted on the self-propelling means (10) wherein the various products are mixed, an electronic weighing system (30) operatively connected to a drive mechanism (25), **characterised in that** said electronic weighing system (30) is adapted to vary the speed of said conveyor (24) according to the weight and type of the materials to be introduced, in order to send the materials to established positions inside said tank (40).

2. Equipment according to claim 1, wherein said desilaging device (20) is also provided with a cutter (21) connected to a channel (23) enclosing said conveyor (24) and adapted to collect the products to be mixed and direct them onto the conveyor (24).

3. Equipment according to claim 1, wherein said desilaging device (20) is also provided with a mill cutter (22) adapted to reduce the size of long fibre products to improve the mixing capacity.

4. Equipment according to claim 1, wherein said desilaging device (20) is attached at one end in an oscillating manner to the self-propelling means (10).

5. Equipment according to claim 1, wherein said container or tank (40) has an elongated cylindrical form, totally or partially open on the top adapted to contain a rotor (41) comprising a rotating shaft (42) on which are mounted the mixing elements (43) composed of anchor or blade shaped elements positioned in a spiral around the shaft.

6. Equipment according to claim 5, wherein said mixing elements (43) are also mounted with a plurality of scrapers (47) near the peripheral edges, in the form of sheets in elastic material, for example fabric-faced rubber, adapted to evacuate all mixed products from the tank eliminating all residue.

7. Equipment according to claim 6, wherein said container (40) is also provided with an opening (46) on at least one side and in a preferably central position for unloading the mixed products, that can be closed with a door (44) automatically controlled by means of appropriate hydraulic cylinders (45).

8. Operating process of equipment or apparatus for the loading and mixing of fibrous products according to any one of the previous claims, comprising the following steps:
- a cutter (21) positioned at the free end of said desilaging device (20) takes up the materials to be mixed;
- said materials are transported by a conveyor (24) towards a mixing container or tank (40);
- the materials to be mixed are introduced through an outlet opening (26) on the conveyor (24);
- the introduced materials to be mixed are weighed by a weighing system (30);
- **characterised in that** a control unit (33) of said weighing system (30) varies the speed of said conveyor (24) according to the weight and type of the materials to be introduced, in order to send the materials to established positions inside said tank (40).

9. Operating process for loading and mixing equipment according to claim 8, wherein said process also comprises a further step for cutting the product fibres by the mill cutter (22).

## Patentansprüche

1. Vorrichtung zum Laden und Mischen von faserigen Erzeugnissen, umfassend selbstfahrende Mittel (10), eine Silage abführende Vorrichtung (20), die positioniert ist, um sich mit einer oszilierenden Bewegung von einem vorderen Abschnitt des selbstfahrenden Mittels (10) zu erstrecken und mit einer Fördereinrichtung (24) montiert ist, die angepasst ist, um zu mischende Produkte zu laden, einen Behälter oder Tank (40), der auf dem selbstfahrenden Mittel (10) montiert ist, wobei die verschiedenen Produkte vermischt werden, ein elektronisches Abwiegesystem (30) das im Betrieb mit einem Antriebsmechanismus (25) verbunden ist, **dadurch gekennzeichnet, dass** das elektronische Abwiegesystem (30) angepasst ist, um die Geschwindigkeit der Fördereinrichtung (24) entsprechend des Gewichts und der Art des Materials, das eingeführt wird, zu variieren, um das Material in feststehende Positionen innerhalb des Tanks (40) zu befördern.

2. Vorrichtung gemäß Anspruch 1, wobei die Silage abführende Vorrichtung (20) auch mit einer Schneidvorrichtung (21) bereitgestellt ist, die mit einem Kanal (23) verbunden ist, der sich an die Fördereinrichtung (24) anschließt und angepasst ist, um die Produkte, die gemischt werden, zu sammeln und auf die Fördereinrichtung (24) zu leiten.

3. Vorrichtung gemäß Anspruch 1, wobei die Silage abführende Vorrichtung (20) auch mit einem Fräser (22) vorgesehen ist, der angepasst ist, um die Größe von langen faserigen Produkten zu reduzieren und die Mischkapazität zu verbessern.

4. Vorrichtung gemäß Anspruch 1, wobei die Silage abführende Vorrichtung (20) an einem Ende in einer oszilierenden Weise an dem selbstfahrenden Mittel (10) befestigt ist.

5. Vorrichtung gemäß Anspruch 1, wobei der Behälter oder Tank (40) eine verlängerte zylindrische Form, vollständig oder teilweise offen auf der Oberseite aufweist, die angepasst ist, um einen Rotor (41) aufzunehmen, der eine rotierende Welle (42) umfasst, auf der die Mischelemente (43) montiert sind, die aus aufspannenden oder winkelgeformten Elementen zusammengesetzt sind und in einer Spirale um die Welle positioniert sind.

6. Vorrichtung gemäß Anspruch 5, wobei die Mischelemente (43) auch mit einer Vielzahl von Abstreifern (47) in der Nähe der Umfangsränder montiert sind, in der Gestalt von Blättern aus elastischem Material zum Beispiel mit einem Gewebegummi, das angepasst ist, um alle gemischten Produkte aus dem Tank zu entleeren und dabei alle Reste zu eliminieren.

7. Vorrichtung gemäß Anspruch 6, wobei der Behälter (40) auch mit einer Öffnung (46) auf zumindest einer Seite und vorzugsweise einer zentralen Position ausgebildet ist, um die gemischten Produkte zu entladen, die mit einer Türe (44) geschlossen werden kann und automatisch mittels geeigneter hydraulischer Zylinder (45) gesteuert wird.

8. Betriebsverfahren einer Vorrichtung oder eines Geräts zum Laden und Mischen von faserigen Produkten gemäß einem der vorhergehenden Ansprüche umfassend die folgenden Schritte:
- eine Schneidvorrichtung (21), die an einem freien Ende der Silage abführenden Vorrichtung (20) positioniert ist, nimmt die zu mischenden Materialien auf;
- die Materialien werden von einer Fördereinrichtung (24) in Richtung eines Mischbehälters oder Tanks (40) transportiert;
- die zu mischenden Materialien werden durch eine Auslassöffnung (26) auf der Fördereinrichtung (24) eingeführt;
- die eingeführten Materialien, die gemischt werden, werden von einem Abwiegesystem (30) gewogen;
- **dadurch gekennzeichnet, dass** eine Steuereinheit (33) des Abwiegesystems (30) die Geschwindigkeit von der Fördereinrichtung (24) entsprechend dem Gewicht und der Art des Materials, das eingeführt wird, variiert, um die Materialien zu feststehenden Positionen in dem Tank (40) zu befördern.

9. Betriebsverfahren für eine Lade- und Mischvorrichtung nach Anspruch 8, wobei das Verfahren auch einen weiteren Schritt des Schneidens der faserigen Produkte mittels des Fräsers (22) umfasst.

## Revendications

1. Dispositif destiné à charger et à mélanger des produits fibreux, comprenant un moyen autopropulseur (10), un dispositif de désensilage (20) qui est positionné de manière à s'étendre, avec un mouvement oscillant, à partir de la partie avant du moyen autopropulseur (10) et qui est équipé d'un tapis transporteur (24) apte à charger les produits qui doivent être mélangés, un conteneur ou réservoir (40) monté sur le moyen autopropulseur (10), les divers produits étant mélangés, un dispositif de pesée électronique (30) étant connecté fonctionnellement à un mécanisme d'entraînement (25), **caractérisé en ce que** ledit dispositif de pesée électronique (30) est apte à faire varier la vitesse dudit tapis transporteur (24) en fonction du poids et du type de matériaux qui doivent être introduits, afin d'envoyer les matériaux à des emplacements déterminés à l'intérieur dudit réservoir (40).

2. Dispositif selon la revendication 1, ledit dispositif de désensilage (20) étant également muni d'un élément de coupe (21) connecté à un canal (23) renfermant ledit tapis transporteur (24) et étant apte à recueillir les produits qui doivent être mélangés et à les envoyer sur le tapis transporteur (24).

3. Dispositif selon la revendication 1, ledit dispositif de désensilage (20) étant également muni d'un outil de coupe tournant (22) apte à réduire la taille de produits comportant des fibres longues afin d'améliorer l'aptitude au mélange.

4. Dispositif selon la revendication 1, ledit dispositif de désensilage (20) étant fixé par une extrémité, de manière oscillante, au moyen autopropulseur (10).

5. Dispositif selon la revendication 1 dans lequel ledit conteneur ou réservoir (40) a une forme cylindrique oblongue, totalement ou partiellement ouverte au sommet, apte à contenir un rotor (41) comprenant un arbre rotatif (42) sur lequel sont montés les éléments mélangeurs (43) constitués d'éléments en forme d'ancre ou de lame positionnés en hélice autour de l'arbre.

6. Dispositif selon la revendication 5 dans lequel lesdits éléments mélangeurs (43) sont également équipés à proximité des bords périphériques d'une pluralité de racleurs (47), se présentant sous forme de feuilles d'un matériau élastique, par exemple du caoutchouc revêtu de tissu, aptes à évacuer du réservoir tous les produits mélangés en éliminant tous les résidus.

7. Dispositif selon la revendication 6 dans lequel ledit conteneur (40) est également muni, sur au moins un côté, d'une ouverture (46), positionnée de préférence de façon centrale et destinée au déchargement des produits mélangés, laquelle ouverture peut être fermée au moyen d'une porte (44) commandée automatiquement au moyen de vérins hydrauliques appropriés (45).

8. Processus de fonctionnement d'un dispositif ou appareil destiné au chargement et au mélange de produits fibreux selon l'une quelconque des revendications qui précèdent, comprenant les étapes suivantes :
- un organe de coupe (21) positionné à l'extrémité libre dudit dispositif de désensilage (20) qui recueille les matériaux qui doivent être mélangés ;
- lesdits matériaux sont transportés par un tapis transporteur (24) en direction d'un conteneur ou réservoir de mélange (40) ;
- les matériaux qui doivent être mélangés sont introduits par une ouverture d'évacuation (26), sur le tapis transporteur (24) ;
- les matériaux destinés à être mélangés qui ont été introduits sont pesés par un dispositif de pesée (30) ;
- **caractérisé en ce qu'**un ensemble de commande (33) dudit dispositif de pesée (30) fait varier la vitesse dudit tapis transporteur (24) en fonction du poids et du type des matériaux qui doivent être introduits, afin d'envoyer les matériaux jusqu'à des emplacements déterminés à l'intérieur dudit réservoir (40).

9. Processus de fonctionnement pour le dispositif de chargement et de mélange selon la revendication 8, ledit processus comprenant également une étape supplémentaire consistant à couper les fibres du produit au moyen de l'outil de coupe tournant (22).
